(19) Europäisches Patentamt / European Patent Office / Office européen des brevets

(11) **EP 4 498 320 B1**

(12) **EUROPEAN PATENT SPECIFICATION**

(45) Date of publication and mention
of the grant of the patent:
**29.04.2026 Bulletin 2026/18**

(21) Application number: **24175240.1**

(22) Date of filing: **10.05.2024**

(51) International Patent Classification (IPC):
*G06T 7/00* $^{(2017.01)}$       *G06T 7/60* $^{(2017.01)}$

(52) Cooperative Patent Classification (CPC):
**G06T 7/001; G06T 7/12; G06T 7/60;**
G06T 2207/10024; Y02E 60/10

(54) **LUG DEFECT DETECTION METHOD AND SYSTEM**

VERFAHREN UND SYSTEM ZUR ERKENNUNG VON NOCKENDEFEKTEN

PROCÉDÉ ET SYSTÈME DE DÉTECTION DE DÉFAUT DE LANGUETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Validation States:
**MA**

(30) Priority: **28.07.2023 CN 202310943692**

(43) Date of publication of application:
**29.01.2025 Bulletin 2025/05**

(73) Proprietors:
• **Shanghai Ruipu Energy Co., Ltd.
Shanghai 201206 (CN)**
• **REPT BATTERO Energy Co., Ltd.
Wenzhou, Zhejiang 325000 (CN)**

(72) Inventors:
• **CAO, Hui
WENZHOU (CN)**
• **WU, Shiming
WENZHOU (CN)**
• **NI, Wei
WENZHOU (CN)**
• **CAI, Linsheng
WENZHOU (CN)**
• **WANG, Hui
WENZHOU (CN)**
• **ZHANG, Shaoke
WENZHOU (CN)**

(74) Representative: **Potter Clarkson
Chapel Quarter
Mount Street
Nottingham NG1 6HQ (GB)**

(56) References cited:
**CN-A- 113 203 745      CN-A- 114 037 657**

• ANONYMOUS: "Consensus (computer science) -
Wikipedia", 24 July 2023 (2023-07-24),
XP093202792, Retrieved from the Internet
<URL:https://en.wikipedia.org/w/index.php?
title=Consensus_(computer_science)&
oldid=1166905199> [retrieved on 20240906]

EP 4 498 320 B1

**Description**

Technical Field

The present application mainly relates to the technical fields of cell lug detection field, and in particular to a lug defect detection method and system.

Background

Cell lugs serve as the terminal interface for the cell to connect to the outside, and their quality directly affects the safety and ultimate life of a finished cell. During the cell manufacturing process, such as the lamination or winding process, the positive electrode piece, the negative electrode piece and the diaphragm are composed of the cell through relevant processes, and in this process, it is necessary to determine whether the lugs of the positive electrode piece and the negative electrode piece are missing or folded.

No matter it is the lamination process or the winding process, the overlap, flatness and absence of folds or missing lugs of the positive and negative electrodes are important manifestations of quality standards. At present, the quality detection of cell lugs is mainly measured through industrial vision combined with correction devices, optical fiber sensing positioning, etc., but the detection results are not good. In actual production, quality problems such as overall folding, partial folding, and missing lugs often occur, and in practical applications, especially the folding lugs will cause a risk of short circuit between the positive and negative electrodes, leaving potential safety hazards for cell use.

CN 113203745 A discloses a lamination device and a pole piece folding detection method, and is used for solving the problem that the folding condition of a pole piece is difficult to detect when the folding part of the pole piece is shielded by the lamination device in the prior art

Summary

The technical problem to be solved by the present invention is to provide a lug defect detection method and system, which can quickly and accurately detect defective lug during the cell preparation process and improve cell quality.

In order to solve the above technical problems, the present application provides a lug defect detection method, comprising: during a preparation process of a battery cell, collecting original image of a relevant area of lug, wherein, the battery cell includes a pole piece, and the pole piece includes a pole piece body and a lug; in a digitally processed original image, setting a baseline based on an edge position of the pole piece body, and from the baseline, setting a side close to the pole piece body as a first detection area, setting another side away from the pole piece body as a second detection area; and detecting a target lug image in the first detection area and the second detection area according to a preset sequence, and determining whether a currently detected cell is a defective cell. The preset sequence includes sequentially detecting the first detection area and the second detection area, wherein if part or all of the target lug image is detected in the first detection area, judging the currently detected cell as a defective cell, otherwise, determining whether the currently detected cell is a defective cell according to one of or a combination of one or more of outline, length and width dimensions or area of the target lug image in the second detection area.

In one embodiment of the present invention, during a preparation process of a battery cell, step of collecting original image of a relevant area of lug further comprises: during a process of continuous preparation of multiple battery cells, continuously collecting original image of a relevant area of lug corresponding to each battery cell before the pole piece corresponding to each battery cell is rolled or stacked.

In one embodiment of the present invention, the lug defect detection method further comprises using two sets of machine vision inspection devices to respectively perform the step of collecting original image, setting the baseline and determining whether the currently detected cell is the defective cell, the two sets of machine vision inspection devices are respectively arranged in a first detection position and a second detection position during the preparation process of the battery cell, and the detection method further includes: when both sets of machine vision inspection devices determine that the currently detected cell is a defective cell, marking the currently detected cell as a defective cell; and when only one set of machine vision inspection devices determines the currently detected cell is a defective cell, marking the currently detected cell as a suspected defective cell for re-inspection.

In one embodiment of the present invention, if part or all of the target lug image is not detected in the first detection area, the detection method further includes using a regional consistency algorithm to obtain multiple area points in the second detection area, connecting multiple area points to form a closed area, thereby obtaining the target lug image, wherein, the regional consistency algorithm includes: constructing a square matrix [n] with nth order all being 1, and obtain a same area pixel $a_{[n]}$ in the second detection area, wherein, the same area pixel $a_{[n]}$ is obtained by binary separation of a final grayscale image obtained by denoising process and grayscale process in the second detection area; comparing the same area pixel $a_{[n]}$ with the square matrix [n], and if a result shows consistency, assigning a position where the same area pixel $a_{[n]}$ is located to a value of 255 and setting as an area point; and connecting all area points in the second detection area to form the closed region A, and obtaining the outline, length and width dimensions or area of the target lug image $a'_{[n]}$ according to the closed region A, thereby determining whether the currently detected cell is a defective cell.

In one embodiment of the present invention, the lug defect detection method further comprises using following method to compare a similarity SIM(i, j) between the region A and a preset lug image, thereby determining whether the currently detected cell is defective cell according to an outline of the target lug image in the second detection area:

$$\text{SIM}(i, j) = \frac{u * \sum A(i, j) Y(i, j)}{\sqrt{\sum (A(i, j))^2} \sqrt{\sum (Y(i, j))^2}}$$

wherein, $A(i, j)$ is an outer edge of the region A, $Y(i, j)$ is an outer edge of the preset lug image, and u is an adjustable scaling coefficient.

In one embodiment of the present invention, the lug defect detection method further comprises using following manner to calculate a lug transverse width L and a lug longitudinal width H, thereby determining whether the currently detected cell is defective cell according to the length and width dimensions of the target lug image in the second detection area:

$$\begin{cases} L = \dfrac{\sum_{i=1}^{N} a'_{[n]iw}}{N} - \dfrac{\sum_{i=1}^{N} a'_{[n]iv}}{N} \\ H = \dfrac{\sum_{j=1}^{M} a'_{[n]pj}}{M} - \dfrac{\sum_{j=1}^{M} a'_{[n]qj}}{M} \end{cases}$$

wherein, $a'_{[n]iw}$ is a lateral position value of pixel $a'_{[n]}$ in column w and row i, $a'_{[n]iv}$ a horizontal position value of pixel $a'_{[n]}$ in column v and row i, $a'_{[n]pj}$ is a vertical position value of pixel $a'_{[n]}$ in column j and row p, $a'_{[n]qj}$ is a vertical position value of pixel $a'_{[n]}$ in column j and row q, and the w, v, p and q are obtained according to the region A, N represents a number of rows of $a'_{[n]}$, and M represents a number of columns of $a'_{[n]}$.

In one embodiment of the present invention, the lug defect detection method further comprises using following manner to calculate a lug transverse width L and a lug longitudinal width H, then calculating an area $S_A$ of the region A, then determining whether the currently detected cell is defective cell according to an area of the target lug image in the second detection area:

$$s_A = \frac{\int_{L_w}^{L_v} f(a'_{[n]}) dL + \int_{H_p}^{H_q} g(a'_{[n]}) dH}{2}$$

wherein, $L_w$ is a left starting point of the lug transverse width L, $L_v$ is a right end point of the lug transverse width L, $H_p$ is a lower starting point of the lug longitudinal width H, $H_q$ is an upper end point of the lug longitudinal width H, $f(a'_{[n]})$ is a function value of the transverse synthesis of the lug, $g(a'_{[n]})$ is a function value of the longitudinal synthesis of the lug.

In one embodiment of the present invention, the digitally processed original image is a final grayscale image *Gray(i, j)* obtained by sequentially performing the denoising process and the grayscale process on the original image, and the method further includes setting the baseline in the final grayscale image *Gray(i, j)* according to an edge position of the pole piece body of the battery cell.

In one embodiment of the present invention, if part or all of the target lug image is not detected in the first detection area, the detection method further includes performing a binary separation of pixel on the final grayscale image *Gray(i, j)* according to following formula:

$$B(i, j) = \begin{cases} 0 & Gray(i, j) <= h \\ 1 & Gray(i, j) > h \end{cases}$$

wherein, a value range of h is 125~255.

In one embodiment of the present invention, the denoising process comprises realizing stacking of three primary colors in the following manner to obtain the denoised image corresponding to the original image.

$$\begin{cases} R(i,j) = \sum_{m,n} R(i+m, j+n) * K_R(m,n) \\ G(i,j) = \sum_{m,n} G(i+m, j+n) * K_G(m,n) \\ B(i,j) = \sum_{m,n} B(i+m, j+n) * K_B(m,n) \end{cases}$$

wherein, $(i,j)$ is a two-dimensional matrix position of any pixel in the original image, $R(i,j)$, $G(i,j)$ and $B(i,j)$ are corresponding values of the three primary colors RGB, $K_R(m, n)$, $K_G(m, n)$ and $K_B(m, n)$ are filter algorithms corresponding to the three primary colors RGB.

In one embodiment of the present invention, the grayscale process comprises processing the denoised image in following manner to obtain the final grayscale image $Gray(i, j)$:

$$Gray(i,j) = k_1 R(i,j) + k_2 G(i,j) + k_3 B(i,j)$$

wherein, $k_1$, $k_2$ and $k_3$ are corresponding weighted values of the three primary colors RGB.

Another aspect of the present invention also provides a lug defect detection system, comprising at least one set of machine vision inspection device, the machine vision inspection device includes a camera and a processor, wherein, the camera is adapted to collect original image of relevant area of lug during a preparation process of a battery cell, wherein the battery cell includes a pole piece, and the pole piece includes a pole piece body and a lug; the processor is adapted to digitally process the original image and set a baseline according to an edge position of the pole piece body of the battery cell, wherein, from the baseline, a side close to the pole piece body in the battery cell is a first detection area, and another side away from the pole piece body is a second detection area; and the processor is also adapted to detect a target lug image in the first detection area and the second detection area in a preset sequence according to the above mentioned detection method, and determine whether the currently detected cell is a defective cell.

In one embodiment of the present invention, number of the machine vision inspection devices is two groups, comprising a first group of machine vision inspection devices located at a first detection position and a second group of machine vision inspection devices located at a second detection position, the first detection position and the second detection positions are respectively located at process positions before the pole piece is rolled or stacked during the preparation process of the battery cell, and the first detection position is located in a former production sequence compared to the second detection position, wherein, when both the first group of machine vision inspection devices and the second group of machine vision inspection devices determine that the currently detected cell is a defective cell, the first group of machine vision inspection device and/or the second group of machine vision inspection device is configured to mark the currently detected cell as a defective cell; and when only the first group of machine vision inspection device or only the second group of machine vision inspection device determines that the currently detected cell is a defective cell, the first group of machine vision inspection device or the second group of machine vision inspection device is configured to mark the currently detected cell as a suspected defective cells for re-inspection.

Compared with the existing technology, this application has the following advantages: through the lug defect detection method and system, the invisible quality problems of lugs in the cell lamination process or winding process can be solved more quickly and accurately, eliminating the hidden danger of single cell short circuit. This application applies industrial vision combined with cell displacement to quickly detect the quality status of lugs in the area in real time, and through the arrangement of dual vision, redundant functions are added to completely eliminate defective lug cells, significantly improving cell quality.

Brief Description of the Drawings

The drawings are included to provide a further understanding of the present application, and they are included and constitute a part of the present application, the drawings show the embodiments of the present application, serving to explain the principles of the present application together with the description. In the drawings:

Fig. 1a is a schematic flow chart of a lug defect detection method according to an embodiment of the present application;

Fig. 1b is a schematic flow chart of a lug defect detection method according to another embodiment of the present application;

Fig. 2 is a schematic view of different forms of lugs detected using a lug defect detection method according to an embodiment of the present application;

Fig. 3 is a schematic structural view of a lug defect detection system according to an embodiment of the present application;

Fig. 4 is a schematic view of the detection area in lug defect detection method according to an embodiment of the present application;

Fig. 5 is a schematic flow chart of lug defect detection method according to another embodiment of the present application;

Fig. 6 is a schematic view of the principle of the regional consistency algorithm in a lug defect detection method according to an embodiment of the present application; and

Fig. 7 is a flow chart of a lug defect detection method according to another embodiment of the present application.


Preferred Embodiment of the Present Invention

In order to illustrate the technical solutions in the embodiments of the present application more clearly, the drawings that need to be used in the description of the embodiments will be briefly introduced below. Obviously, the drawings in the following description are only some embodiments of the present application, and for those skilled in the art, other drawings can also be obtained based on these drawings without creative effort.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", "landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

For the convenience of description, spatially relative terms may be used here, such as "on ...", "over ...", "on the upper surface of ...", "above", etc., to describe the spatial positional relationship between one device or feature and other devices or features. It will be understood that, in addition to the orientation depicted in the drawings, the spatially relative terms are intended to encompass different orientations of the device in use or operation. For example, if the device in the drawings is turned over, devices described as "on other devices or configurations" or "above other devices or configurations" would then be oriented "beneath other devices or configurations" or "under other devices or configurations". Thus, the exemplary term "above" can encompass both an orientation of "above" and "beneath". The device may be otherwise oriented (rotated 90 degrees or at other orientations), and making a corresponding explanation for the space relative description used here.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant segment of the description. Furthermore, it is required that this application be understood not only by the actual terms used, but also by the meaning implied by each term.

The existing battery cell lug quality inspection methods mainly focus on: 1. Using industrial vision combined with a correction device to correct the overlap of the lugs, so that the positive and negative lugs of the battery cell overlap within the unified nominal value; 2. Using sensors such as optical fibers to detect the presence and wrinkles of the lugs at specific points; 3. Using industrial vision to detect the distance between the lugs to determine the quality of the corresponding lugs. However, these methods still have major shortcomings in actual production applications. For example, the detection accuracy of defective lugs is not high, the detection speed is slow, and it is easy to misjudge.

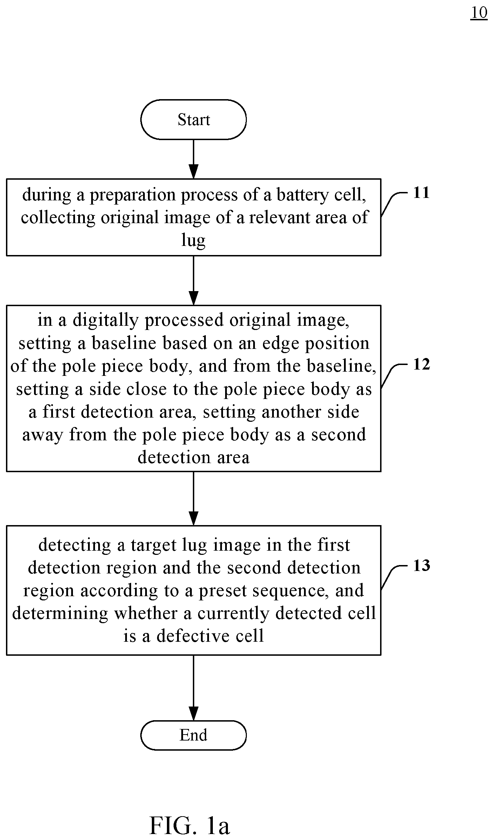

In order to solve the above technical problems, this application proposes a lug defect detection method 10 (hereinafter referred to as "detection method 10") with reference to Fig. 1a, which can quickly and accurately detect defective lugs during the cell preparation process and improve cell quality. Many figures in this application including Fig. 1a, use some flow charts to illustrate the operations performed by the system according to the embodiments of the application. It should be understood that the preceding or following operations are not necessarily performed in exact order. Instead, the various steps can be processed in reverse order or simultaneously. At the same time, other operations may be added to these processes, or one step or steps may be removed from these processes.

According to Fig. 1a, the detection method 10 includes steps 11 to 13. Step 11 is during a preparation process of a battery cell, collecting original image of a relevant area of lug. The cell includes a pole piece, and the pole piece includes a pole piece body and a lug. Step 12 is in a digitally processed original image, setting a baseline based on an edge position of the pole piece body, and from the baseline, setting a side close to the pole piece body as a first detection area, setting another side away from the pole piece body as a second detection area. Step 13 is detecting a target lug image in the first detection region and the second detection region according to a preset sequence, and determining whether a currently detected cell is a defective cell. It should be noted that in different embodiments of the present application, the pole piece includes a pole piece body and a lug, and this is a theoretical definition and division made to facilitate the description of the technical features of the present application; in practical applications, the pole piece body and the lug according to the definition of this application can be integrated, and this application does not limit this.

For example, during the detection process, the first detection area and the second detection area can be detected simultaneously, or the first detection area and the second detection area can be detected sequentially, and the detection order can be selected according to the actual situation. Preferably, the preset sequence includes sequentially detecting the first detection area and the second detection area, wherein if part or all of the target lug image is detected in the first detection area, the current detection cell is determined to be a defective cell, otherwise, judging whether the current detection cell is a defective cell according to one or more combinations of the outline, length and width dimensions or area of the target lug image $a'_{[n]}$ in the second detection area.

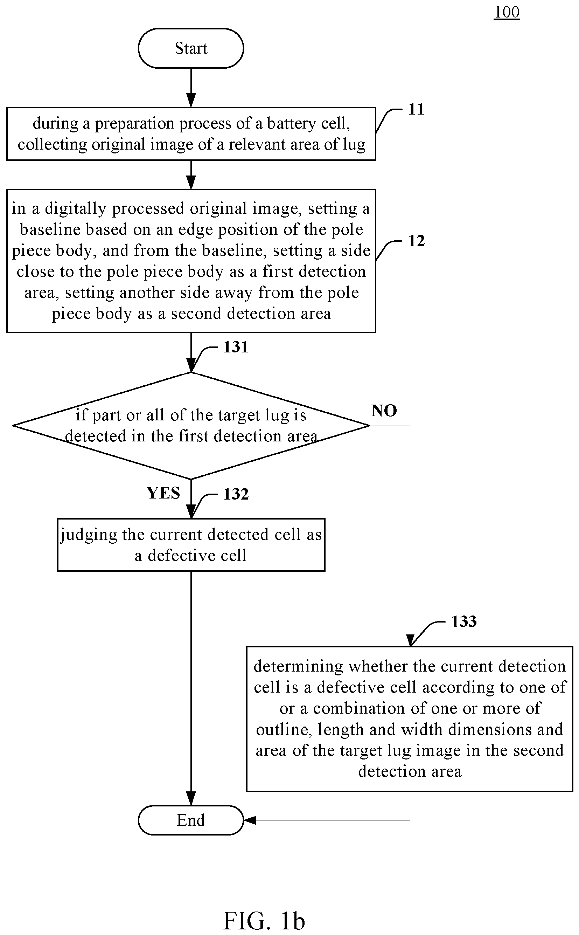

Fig. 1b shows a lug defect detection method 100 of the present application (hereinafter referred to as the "detection method 100") implemented according to the above preferred manner. According to the detection method 100, steps 11 and 12 are the same as the detection method 10, which are the steps of collecting the original image and setting the baseline, the first detection area and the second detection area. The difference is that the detection method 100 shown in Fig. 1b additionally has steps 131-133. Specifically, step 131 is to determine if part or all of the target lug image is detected in the first detection area, and if the detection result is yes, step 132 is executed to judge that the currently detected cell is a defective cell. If the detection result of step 131 is no, step 133 is executed, determining whether the currently detected cell is a defective cell according to one or more combinations of the outline, length and width dimensions or area of the target lug image $a'_{[n]}$ in the second detection area.

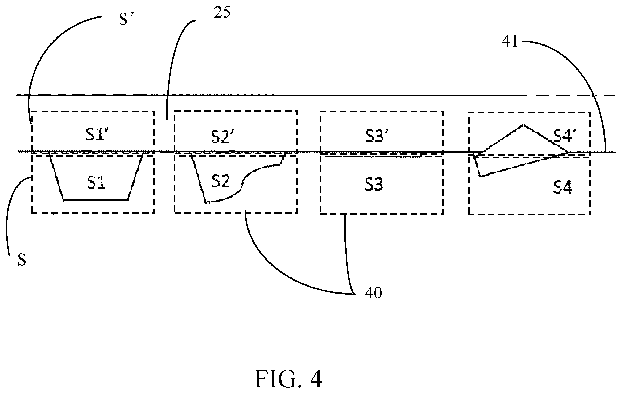

For example, the original image of the relevant area of lug can be understood as an original image of the lug and its surrounding area with a unified shape (how to delineate the relevant area will be further explained below with reference to Fig. 4). In a preferred embodiment of the present application, the above-mentioned detection method 10 is applied during the process of continuous preparation of cells, that is, during the process of continuous preparation of multiple battery cells, continuously collecting original image of a relevant area of lug corresponding to each battery cell before the positive electrode piece, negative electrode piece and diaphragm corresponding to each battery cell is rolled or stacked.

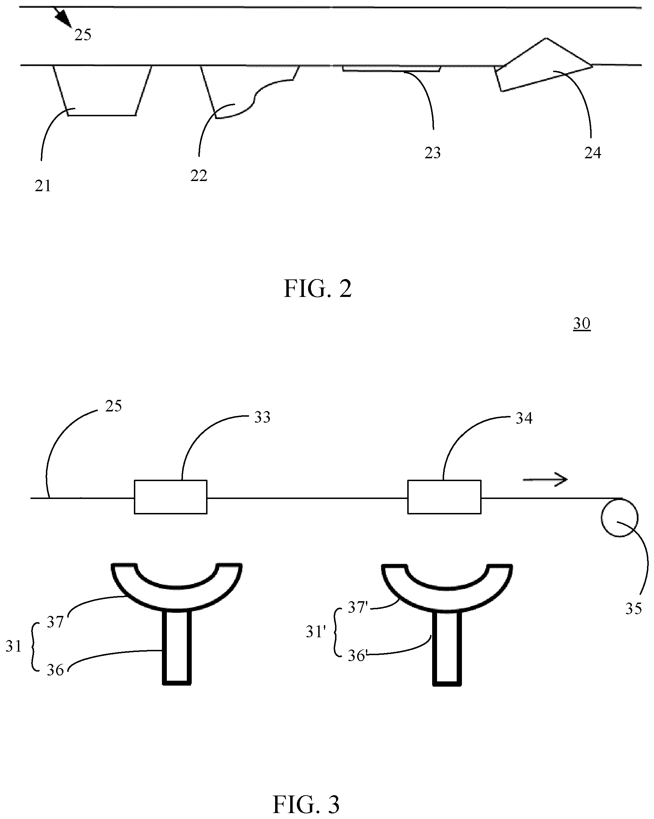

Continuing to refer to Fig. 2, Fig. 2 shows a schematic view of different forms of lugs, and the lug in the normal state is shown as reference numeral 21; the state of the defective lug is shown as reference numeral 22; the state of the missing lug is as shown as reference numeral 23; the folded state of the lug is shown as reference numeral 24; reference numeral 25 refers to the pole piece body. This embodiment only shows the lugs in four states, but the states of the lugs detected in this application are not limited to this. One of the purposes of this application is to implement the lug defect detection method through one or more sets of machine vision detection devices, thereby improving cell quality in the embodiment shown in Fig. 1a and Fig. 1b.

In order to better explain the detection method 10 and its preferred modifications, a lug defect detection system 30 (hereinafter referred to as "detection system 30") is now introduced with reference to Fig. 3. Referring to Fig. 3, the detection system 30 includes two groups of machine vision detection devices, namely a first group of machine vision detection device 31 and a second group of machine vision detection device 31', wherein, the first group of machine vision detection device 31 and the second group of machine vision detection device 31' respectively include a first camera 36, a second camera 36' and respective processors (not shown). It should be noted that the detection system 30 can apply the detection method 10 or the detection method 100. Therefore, in the following description of the present application, some detailed features of the detection system 30 may be referred to the descriptions of the detection method 10 and the detection method 100, and repeated content will not be described again.

Specifically, the first camera 36 and the second camera 36' are suitable for collecting original images of the relevant areas of lugs during the preparation process of the cells. Referring to Fig. 3, in a specific implementation of this embodiment, the first group of machine vision detection device 31 and the second group of machine vision detection device 31' also have a first brightness adjuster 37 and a second brightness adjuster 37' respectively, the first brightness adjuster 37 and the second brightness adjuster 37' are shown as semi-circular rings in Fig. 3, and the first camera 36 and the second camera 36' are shown as rectangular parts in Fig. 3, the first camera 36 and the second camera 36' are respectively installed on the first brightness adjuster 37 and the second brightness adjuster 37'. The first camera 36 and the second camera 36' are interconnected with their corresponding processors and can perform data transmission. The first group of machine vision detection device 31 and the second group of machine vision detection device 31' are respectively arranged at the first detection position and the second detection position during the preparation process of the cell. The driving mechanism 35 drives the pole pieces to rotate at high speed, and the first lug 33 and the second lug 34 continuously arranged on the pole pieces will pass through two sets of machine vision detection devices in sequence. The first group of machine vision detection device 31 and the second group of machine vision detection device 31' will sequentially collect the original images on each passing relevant area of lug, and the processors in the two groups of machine vision detection devices are suitable for using the same algorithm to collect original images being processed to obtain corresponding digitally processed original images. It can be understood that in practical applications, some parameters of the algorithm can be adjusted according to the conditions of the production site, so as to achieve better coordination and cooperation between the two sets of machine vision detection devices. When adjusting the parameters, the operating speed of the pole pieces, the distance between the two sets of machine vision detection devices and the currently prepared cell model etc. can be considered, and this application does not limit this.

In this application, the processor of the machine vision detection device is usually configured to detect target lug images in the first detection area and the second detection area in a preset sequence, and then determine whether the currently detected cell is a defective cell. In some preferred embodiments, the processor can also sequentially detect the detection target lug images of the first detection area and the second detection area in a preset sequence, wherein if part or all of the target lugs are detected in the first detection area, judging the current detected cell as a defective cell, otherwise, determining whether the current detection cell is a defective cell according to one or more arbitrary combinations of the outline, length and width dimensions and area of the target lug image $a'_{[n]}$ in the second detection area.

Preferably, this embodiment uses two sets of machine vision detection devices to detect lug defects, and the purpose of using two sets of machine vision detection device is to ensure the reliability of the detection; only when the cell detected by both sets of machine vision detection devices are diagnosed as normal, will they be considered qualified. If the cell is diagnosed as abnormal by both groups, it will be directly rejected as a defective cell. In other cases, it will be judged as a suspected defective cell being transferred to the manual visual detection area for manual judgment. Of course, based on the embodiment shown in Fig. 3, more sets of machine vision detection devices can be used to detect lug defects according to actual conditions, and the present application is not limited to this. In addition, when two sets of machine vision detection devices detect target lug images in the first detection area and the second detection area in a preset sequence, and determine whether the currently detected cell is a defective cell, the same detection order can be adopted, or different detection orders can be adopted. When the two sets of machine vision detection devices determine whether the currently detected cell is a defective cell according to one or more combinations of the outline, length and width dimensions or area of the target lug image $a'_{[n]}$ in the second detection area, the judgment methods used can be the same or different. For example, the first group of machine vision detection device 31 determines whether the current detection cell is a defective cell based on the outline and length and width dimensions of the target lug image in the second detection area, while the second group of machine vision detection device 31' determines whether the current detection cell is a defective cell based on the outline, length and width dimensions and area of the target lug image $a'_{[n]}$ in the second detection area. Details of different situations will not been listed one by one here. Preferably, the first group of machine vision detection device 31 and the second group of machine vision detection device 31' adopt the same detection sequence and the same judgment method.

In this embodiment, the cameras in the first group of machine vision detection device 31 and the second group of machine vision detection device 31' shown in Fig. 3 can perform original image collection with reference to step 11 in the detection method 10 shown in Fig. 1a, and the processors therein is adapted to perform image processing with reference to steps 12 and 13 in the detection method 10 as shown in Fig. 1a. For example, a baseline is set based on the data information contained in the original image and based on the edge position of the pole piece body 25 of the cell, wherein the side of the baseline close to the pole piece body 25 is the first detection area, and the other side further away from the pole piece body 25 is the second detection area. The processor is further configured to detect the target lug image in the first detection area and/or the second detection area according to a built-in algorithm, and determine whether the current detection cell is a defective cell. The algorithm part will be further explained below.

Exemplarily, Fig. 4 shows a schematic view of the principle of delineating a baseline to obtain the first detection area S' and the second detection area S in this embodiment. Referring to Fig. 4, Fig. 4 shows a schematic view of a set of continuous lug defect detection areas during the continuous preparation process of multiple battery cells, including four first detection areas, namely No. 1 first detection area S1', No. 2 first detection area S2', No. 3 first detection area S3', No. 4 first detection area S4', and four second detection areas, namely No. 1 second detection area S1, No. 2 second detection area S2, No. 3 second detection area S3, No. 4 second detection area S4. In this embodiment, when battery cells of the same model are continuously prepared, the relevant area of lug proposed above is a rectangular area 40 with a uniform size. After obtaining the original image of the rectangular area 40 corresponding to each lug, after digital processing, the baseline 41 can be marked in the rectangular area 40 according to the edge position of the pole piece body 25. For example, in this embodiment, the baseline 41 itself is the edge position of the pole piece body 25. After setting the baseline 41, it can further set the side close to the pole piece body 25 (or in this embodiment, it can be understood as the area above the baseline 41 in the rectangular area 40) as the first detection area S', and the other side further away from the pole piece body 25 is the second detection area S.

The basic concepts of a lug defect detection method and system proposed by this application have been preliminarily explained above with reference to Fig. 1a to 4, and the following will further describe in detail on how to perform data processing on the original images of the collected relevant areas of lug in some preferred embodiments based on the detection method 10 in Fig. 1a, the detection method 100 in Fig. 1b, and the detection system 30 in Fig. 3.

First, in some embodiments of the present application, the original image that has been digitized is the final grayscale image *Gray(i, j)* obtained by sequentially performing denoising processing and grayscale processing on the original image.

Preferably, the denoising process includes stacking three primary colors in the following manner to obtain a denoised image corresponding to the original image:

$$\begin{cases} R(i,j) = \sum_{m,n} R(i+m, j+n) * K_R(m,n) \\ G(i,j) = \sum_{m,n} G(i+m, j+n) * K_G(m,n) \\ B(i,j) = \sum_{m,n} B(i+m, j+n) * K_B(m,n) \end{cases}$$

wherein, *(i,j)* is the two-dimensional matrix position of any pixel in the original image, *R(i,j)*, *G(i,j)* and *B(i,j)* are the corresponding values of the three primary colors RGB, the value range is [0,250] or [0,255], etc., and the upper limit value can be selected between 250-255; $K_R(m,n)$, $K_G(m,n)$ and $K_B(m,n)$ are filter algorithms corresponding to the three primary colors RGB, and the filters can be adjusted according to actual application conditions and can be matched filters or high-pass filters, low-pass filters and band-pass filters to adjust the algorithm.

For example, the stacking of the three primary colors includes calculating the R value of each pixel in the original image, the R value has a corresponding filter $K_R(m,n)$. The main function of the filter is to remove impurities in the original image. The R value *R(i,j)* of the original image is the sum of the R values of each pixel of the original image after filtering. The method of calculating the G value and B value is similar, which will not be repeated into details here. This application realizes the stacking of three primary colors through algorithms, and finally presents the denoised image corresponding to the original image.

Further preferably, the grayscale processing includes processing the denoised image in the following manner to obtain the final grayscale image *Gray(i,j)*:

$$Gray(i,j) = k_1 R(i,j) + k_2 G(i,j) + k_3 B(i,j)$$

wherein, $k_1$, $k_2$ and $k_3$ values are the weighted values corresponding to the three primary colors RGB, and can be set according to the specific usage conditions.

The original image is denoised and grayscale processed to obtain a final grayscale image, and referring to Fig. 4, a baseline 41 is set in the final grayscale image based on the edge position of the pole piece body 25 in the cell. The baseline 41 divides the detection area into two areas: a first detection area S' and a second detection area S, wherein the first detection area S' is a lug-prohibited area, also known as a lug-free area; the second detection area S is the lug-complete area, also known as the lug area. In both the first detection area S' and the second detection area S detection area, the width, shape and area of the figure included in the edge line of the lug can be measured to determine the quality of the lug. Preferably, in some embodiments of the present application including Fig. 1a and Fig. 1b, only when part or all of the target lug image is not detected in the first detection area S', will the the outline, length and width dimensions or area of the target lug image $a'_{[n]}$ are calculated in second detection area S' according to the corresponding algorithm. So that it can further verify whether normal lugs that meet the requirements and standards appear in the second detection area S, that is, the lug area. In this way, the amount of calculation can be reduced and the calculation and response speed of the machine vision detection device can be improved.

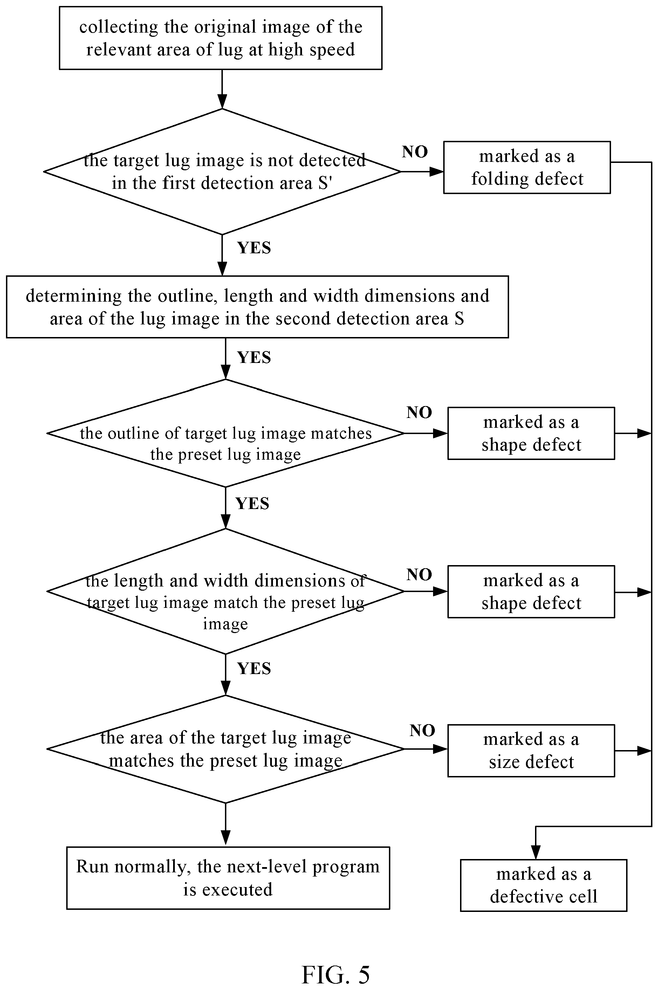

Continuing to refer to Fig. 5, Fig. 5 further optimizes the detection method 10 shown in Fig. 1a and the detection method 100 shown in Fig. 1b, especially for detailed layout of the algorithm of the target lug image in the second detection area S. First, after collecting the original image of the relevant area of lug at high speed, it first detects whether the target lug image is detected in the first detection area S', and if the target lug image is detected, the lug is directly marked as a folding defect. If the target lug image is not detected, the second detection area S is further detected. Detecting the second detection area S includes sequentially determining whether the outline, length and width dimensions and area of the lug image of the second detection area S match the preset lug image. For example, the preset lug image is a standard lug image for a specific cell type.

The optimization algorithm in each step of Fig. 5 will be explained in further detail below. First, for example, if part or all of the target lug image (for example, an image after denoising processing and grayscale processing) is not detected in the first detection area S', the final grayscale image Gray(i,j) can be first performed binary separation of pixels through the following formula:

$$B(i,j) = \begin{cases} 0 & Gray(i,j) <= h \\ 1 & Gray(i,j) > h \end{cases}$$

wherein, the h value is the judgment threshold through adjustment and test, and the value range of the h value is 125~255. The h value is adjustable in the range of 125~255 according to the detection situation, for example, the specific h value can be tested through on-site histogram adjustment, and after grayscale processing, the value at each Gray(i,j) position of the image is between (0-255). Binary separation of the final grayscale image can make the image only appear in black and white colors.

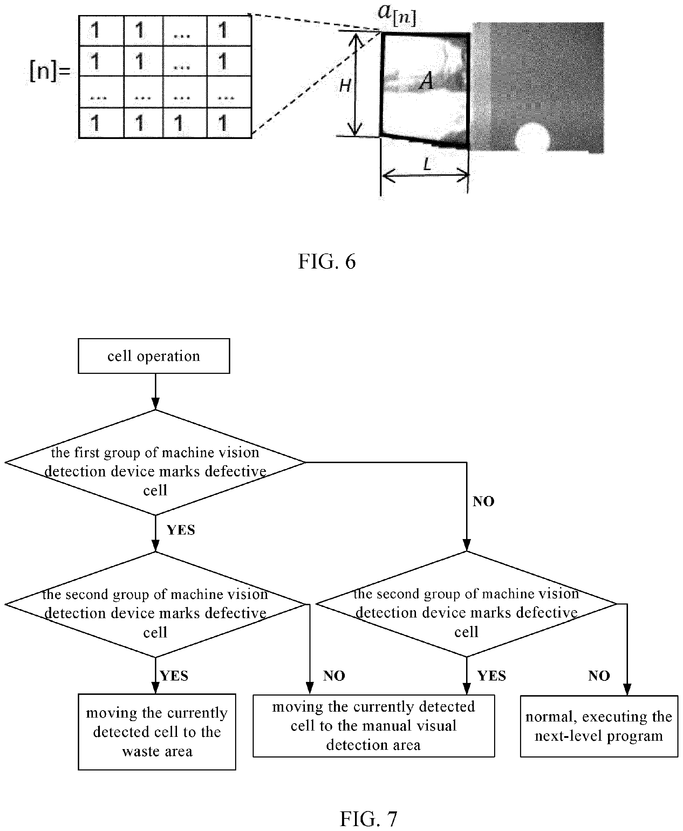

For example, referring to Fig. 6, after binary separation of the final grayscale image, the target lug image can be obtained in the second detection area S through a regional consistency algorithm. The regional consistency algorithm can process images through the following formula:

$$a'_{[n]} = \begin{cases} 255 & area \ a_{[n]} = [n] \\ 0 & others \end{cases}$$

First, constructing a square matrix [n] with nth order all being 1, and obtaining a same area pixel $a_{[n]}$ in the second detection area, wherein, the same area pixel $a_{[n]}$ is obtained by binary separation of the final grayscale image obtained by denoising process and grayscale process in the second detection area. Comparing the same area pixel $a_{[n]}$ with the square matrix [n], and if the result shows consistency, assigning the position where the same area pixel $a_{[n]}$ is located to a value of 255 and set it as an area point; and connecting all the area points in the second detection area to form the closed region A, and obtaining the outline, length and width dimensions or area of the target lug image $a'_{[n]}$ according to the closed region A, thereby determining whether the currently detected cell is a defective cell.

Continuing to refer to Fig. 5, the detection method has a preset lug image with a normal lug image that is set in advance. The detection method 10 determines whether the current detection cell is a defective cell based on the outline of the target lug image in the second detection area S by comparing the similarity SIM(i,j) between area A and the preset lug image. In some preferred embodiments of this application, the specific formula for determining similarity is as follows:

$$\text{SIM}(i, j) = \frac{u * \sum A(i, j) Y(i, j)}{\sqrt{\sum (A(i, j))^2} \sqrt{\sum (Y(i, j))^2}}$$

wherein, $A(i, j)$ is an outer edge of the region A, $Y(i, j)$ is the outer edge of the preset lug image, and u is an adjustable scaling coefficient which can be set manually during the initial comparison of the vision software of the machine vision detection device.

Further, if the outline of the target tab image matches the preset tab image, the length and width dimensions of the target tab image are further calculated. If the outline of the target tab image does not match the preset tab image, then mark the lug as shape defect.

For example, if the outline of the target lug image matches the preset lug image, the length and width dimensions of the target lug image need to be further calculated. Calculating the length and width dimensions of the target lug image mainly includes calculating a lug transverse width L and a lug longitudinal width H, then determining whether the currently detected cell is defective cell according to the length and width dimensions of the target lug image in the second detection area, and the calculation formula of L and H are as below:

$$
\begin{cases}
L = \dfrac{\sum_{i=1}^{N} a'_{[n]iw}}{N} - \dfrac{\sum_{i=1}^{N} a'_{[n]iv}}{N} \\[2mm]
H = \dfrac{\sum_{j=1}^{M} a'_{[n]pj}}{M} - \dfrac{\sum_{j=1}^{M} a'_{[n]qj}}{M}
\end{cases}
$$

wherein, $a'_{[n]iw}$ is a lateral position value of pixel $a'_{[n]}$ in column w and row i, $a'_{[n]iv}$ is a horizontal position value of pixel $a'_{[n]}$ in column v and row i, $a'_{[n]pj}$ is a vertical position value of pixel $a'_{[n]}$ in column j and row p, $a'_{[n]qj}$ is a vertical position value of pixel $a'_{[n]}$ in column j and row q, and the w, v, p and q are determined after the area A, i.e. the positions corresponding to the four vertices of the area A automatically obtained in the image with the area A.

Further, if the length and width dimensions of the target lug image match the preset lug image, then the area of the target lug image is further calculated, and if the length and width dimensions of the target lug image do not match the preset lug image, then mark the lug as shape defect.

Continuing to refer to Fig. 5, if the outline and length and width dimensions of the target lug image match the preset lug image, it continues to calculate the area of the target lug image, that is calculating the area $S_A$ of the region A, then determining whether the currently detected cell is defective cell according to the area of the target lug image in the second detection area:

$$
s_A = \frac{\int_{L_w}^{L_v} f(a'_{[n]})dL + \int_{H_p}^{H_q} g(a'_{[n]})dH}{2}
$$

Wherein, $L_w$ is the left starting point of the lug transverse width L, $L_v$ is the right end point of the lug transverse width L, $H_p$ is the lower starting point of the lug longitudinal width H, $H_q$ is the upper end point of the lug longitudinal width H, $f(a'_{[n]})$ is the function value of the transverse synthesis of the lug, $g(a'_{[n]})$ is the function value of the longitudinal synthesis of the lug.

Further, if the area of the target lug image matches the preset lug image, the lug is judged to be a normal lug, which means it can run normally and the next-level program is executed, and if the outline of the target lug image does not match the preset lug image, marking the lug as a size defect.

It can be understood that a preferred embodiment of the detection method 10 shown in Fig. 1a and the detection method 100 shown in Fig. 1b has been described in detail with reference to Fig. 5 and Fig. 6. However, this application is not limited to the content described above. For example, referring to Fig. 5, when it is necessary to determine the outline, length and width dimensions and area of the lug in the second detection area S2, one or more of the judgment dimensions can be selected for measurement, such as judging the outline alone, judging the length and width dimensions alone, judging area alone or a combination of the above two or three dimensions, and when a combination of two or three judgment dimensions is used, different judgment dimensions can be applied at the same time, or different judgment dimensions can be applied sequentially. Specifically, the order of judging the outline, judging the length and width and judging the area can also be adjusted based on the specific order in actual situation. Of course, in this embodiment, the outline, length and width dimensions and area are judged in order, but in practical applications, since the algorithm of outline, length and width dimensions is simpler than the algorithm of area, it is preferable to first judge the outline and the length and width dimensions. On the basis of its qualified judgment, the reliability of the judgment is further improved by judging the area, so that the defective lug can be detected more quickly and accurately, the judging speed is faster and the effect is better.

Further, referring to Fig. 7, Fig. 7 further optimizes the detection method 10 shown in Fig. 1a and the detection method 100 shown in Fig. 1b, and the optimized detection method can also refer to the detection system shown in Figure 3, that is, combined with the detection system 30 shown in Fig. 3 to obtain an optimized detection method for lug defects as shown in Fig. 7. In this embodiment, during the operation of the cell, if the first group of machine vision detection device 31 located at the first detection position does not mark the currently detected cell as a defective cell, the second group machine vision detection device 31' located at the second detection position will continue to determine whether the currently detected cell is a defective cell. If the second group of machine visual detection device 31' does not determine the current detected cell is a defective cell, the cell is normal and next-level program is executed, such as hot pressing of normal cells; if the second group of visual detection device 31' determines the current cell is a defective cell, the current detected cell will be judged to be a suspected defective cell, and the current detected cell can be moved to the manual visual detection area to wait for manual review. In this embodiment, in order to keep the production process smooth, both normal lugs and defective lugs will be prepared into finished cell according to the normal process, however, during the preparation process of the cell, the machine vision detection device will mark the detected cells with defective lugs to facilitate re-detection of defective cells or suspected defective cells in the subsequent process to better ensure the quality of the cell.

Further, if the first group of machine vision detection device 31 located at the first detection position marks the current detected cell as a defective cell and transmits the result to the second group of vision detection device 31', then through the second group of machine vision detection device 31 located at the second detection position it determines whether the currently detected cell is a defective cell. If the second group of vision detection device 31' determines that the currently detected cell is not a defective cell, it will determine the currently detected cell as a suspected defective cell, and run the currently detected cell to the manual visual detection area to wait for manual review; if the second group of vision detection device 31' determines that the currently detected cell is a defective cell, it then moves the currently detected cell to the waste area. In other embodiments, if the second group of machine vision detection device 31' determines that the currently detected cell is not a defective cell, the second group of machine vision detection device 31' can also transmit the judgment result to the first group of machine vision detection device 31, and the first group of machine vision detection device 31 determines that the currently detected cell is a suspected defective cell, and moves the currently detected cell to the manual visual detection area.

The basic concepts have been described above, obviously, for those skilled in the art, the above disclosure of the invention is only an example, and does not constitute a limitation to the present application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

Some aspects of the present application may be entirely implemented by hardware, may be entirely implemented by software (including firmware, resident software, microcode, etc.), or may be implemented by a combination of hardware and software. The above hardware or software may be referred to as "block", "module", "engine", "unit", "component" or "system". The processor can be one or more Application Specific Integrated Circuits (ASIC), Digital Signal Processors (DSPs), Digital Signal Processing Devices (DAPDs), Programmable Logic Devices (PLDs), Field Programmable Gate Arrays (FPGAs), a processor, a controller, a microcontroller, a microprocessor, or a combination thereof. Additionally, aspects of the present application may be embodied as a computer product comprising computer readable program code on one or more computer readable media. For example, computer-readable media may include, but are not limited to, magnetic storage devices (e.g., hard disks, floppy disks, magnetic tape...), optical disks (e.g., compact disk CDs, digital versatile disks DVD...), smart cards, and flash memory devices (e.g., cards, sticks, key drives...).

A computer readable medium may contain a propagated data signal embodying a computer program code, for example, in baseband or as part of a carrier wave. The propagated signal may take many forms, including electromagnetic, optical, etc., or a suitable combination. The computer readable medium can be any computer readable medium other than computer readable storage medium, which can communicate, propagate or transfer the program for use by being connected to an instruction execution system, apparatus or device. Program code on a computer readable medium may be transmitted over any suitable medium, including radio, electrical cables, fiber optic cables, radio frequency signals, or the like, or combinations of any of the foregoing.

In the same way, it should be noted that in order to simplify the expression disclosed in the present application and help the understanding of one or more embodiments of the invention, in the foregoing description of the embodiments of the present application, sometimes multiple features are combined into one embodiment, drawings or descriptions thereof. However, this method of disclosure does not imply that the subject matter of the application requires more features than are recited in the claims. Indeed, embodiment features are less than all features of a single foregoing disclosed embodiment.

In some embodiments, numbers describing the quantity of components and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

**Claims**

1.  A lug defect detection method, **characterized by** comprising:

    during a preparation process of a battery cell, collecting original image of a relevant area of lug, wherein, the battery cell includes a pole piece, and the pole piece includes a pole piece body and a lug;
    in a digitally processed original image, setting a baseline based on an edge position of the pole piece body, and from the baseline, setting a side close to the pole piece body as a first detection area, setting another side away from the pole piece body as a second detection area; **characterized in that** the method further comprises:

    detecting a target lug image in the first detection area and the second detection area according to a preset sequence, and determining whether a currently detected cell is a defective cell;
    the preset sequence includes sequentially detecting the first detection area and the second detection area, wherein if part or all of the target lug image is detected in the first detection area, judging the currently detected cell as a defective cell, otherwise, determining whether the currently detected cell is a defective cell according to one of or a combination of one or more of outline, length and width dimensions or area of the target lug image in the second detection area.

2.  The detection method according to claim 1, **characterized in that**, during a preparation process of a battery cell, step of collecting original image of a relevant area of lug further comprises: during a process of continuous preparation of multiple battery cells, continuously collecting original image of a relevant area of lug corresponding to each battery cell before the pole piece corresponding to each battery cell is rolled or stacked.

3.  The detection method according to claim 2, **characterized by** further comprising using two sets of machine vision inspection devices to respectively perform the step of collecting original image, setting the baseline and determining whether the currently detected cell is the defective cell, the two sets of machine vision inspection devices are respectively arranged in a first detection position and a second detection position during the preparation process of the battery cell, and the detection method further includes:

    when both sets of machine vision inspection devices determine that the currently detected cell is a defective cell, marking the currently detected cell as a defective cell; and
    when only one set of machine vision inspection devices determines the currently detected cell is a defective cell, marking the currently detected cell as a suspected defective cell for re-inspection.

4.  The detection method according to claim 1, **characterized in that**, if part or all of the target lug image is not detected in the first detection area, the detection method further includes using a regional consistency algorithm to obtain multiple area points in the second detection area, connecting multiple area points to form a closed area, thereby obtaining the target lug image, wherein, the regional consistency algorithm includes:

    constructing a square matrix [n] with nth order all being 1, and obtain a same area pixel $a_{[n]}$ in the second detection area, wherein, the same area pixel $a_{[n]}$ is obtained by binary separation of a final grayscale image obtained by denoising process and grayscale process in the second detection area;
    comparing the same area pixel $a_{[n]}$ with the square matrix [n], and if a result shows consistency, assigning a position where the same area pixel $a_{[n]}$ is located to a value of 255 and setting as an area point; and
    connecting all area points in the second detection area to form the closed region A, and obtaining the outline, length and width dimensions or area of the target lug image $a'_{[n]}$ according to the closed region A, thereby determining whether the currently detected cell is a defective cell.

5.  The detection method according to claim 4, **characterized by** further comprising: using following method to compare a similarity SIM($i$, j) between the region A and a preset lug image, thereby determining whether the currently detected cell is defective cell according to an outline of the target lug image in the second detection area:

$$\text{SIM}(i, j) = \frac{u * \sum A(i, j) Y(i, j)}{\sqrt{\sum (A(i, j))^2} \sqrt{\sum (Y(i, j))^2}}$$

wherein, $A(i, j)$ is an outer edge of the region A, Y($i$,j) is an outer edge of the preset lug image, and u is an adjustable scaling coefficient.

6. The detection method according to claim 4, **characterized by** further comprising: using following manner to calculate a lug transverse width L and a lug longitudinal width H, thereby determining whether the currently detected cell is defective cell according to the length and width dimensions of the target lug image in the second detection area:

$$\begin{cases} L = \dfrac{\sum_{i=1}^{N} a'_{[n]_{iw}}}{N} - \dfrac{\sum_{i=1}^{N} a'_{[n]_{iv}}}{N} \\ H = \dfrac{\sum_{j=1}^{M} a'_{[n]_{pj}}}{M} - \dfrac{\sum_{j=1}^{M} a'_{[n]_{qj}}}{M} \end{cases}$$

wherein, $a'_{[n]_{iw}}$ is a lateral position value of pixel $a'_{[n]}$ in column w and row i, $a'_{[n]_{iv}}$ is a horizontal position value of pixel $a'_{[n]}$ in column v and row i, $a'_{[n]_{pj}}$ is a vertical position value of pixel $a'_{[n]}$ in column j and row p, $a'_{[n]_{qj}}$ is a vertical position value of pixel $a'_{[n]}$ in column j and row q, w and v respectively denote left starting and right end points of the lug transverse width L, p and q respectively denote lower starting and upper end points of the lug longitudinal width H, and w, v, p and q are obtained according to the region A, N represents a number of rows of $a'_{[n]}$, and M represents a number of columns of $a'_{[n]}$.

7. The detection method according to claim 4, **characterized by** further comprising: using following manner to calculate a lug transverse width L and a lug longitudinal width H, then calculating an area $S_A$ of the region A, then determining whether the currently detected cell is defective cell according to an area of the target lug image in the second detection area:

$$\begin{cases} L = \dfrac{\sum_{i=1}^{N} a'_{[n]_{iw}}}{N} - \dfrac{\sum_{i=1}^{N} a'_{[n]_{iv}}}{N} \\ H = \dfrac{\sum_{j=1}^{M} a'_{[n]_{pj}}}{M} - \dfrac{\sum_{j=1}^{M} a'_{[n]_{qj}}}{M} \end{cases}$$

$$S_A = \dfrac{\int_{L_w}^{L_v} f\left(a'_{[n]}\right) dL + \int_{H_p}^{H_q} g\left(a'_{[n]}\right) dH}{2}$$

wherein, $a'_{[n]_{iw}}$ is a lateral position value of pixel $a'_{[n]}$ in column w and row i, $a'_{[n]_{iv}}$ is a horizontal position value of pixel $a'_{[n]}$ in column v and row i, $a'_{[n]_{pj}}$ is the vertical position value of pixel $a'_{[n]}$ in column j and row p, $a'_{[n]_{qj}}$ is the vertical position value of pixel $a'_{[n]}$ in column j and row q, and the w, v, p and q are obtained according to the region A; $L_w$ is a left starting point of the lug transverse width L, $L_v$ is a right end point of the lug transverse width L, $H_p$ is a lower starting point of the lug longitudinal width H, $H_q$ is an upper end point of the lug longitudinal width H, $f(a'_{[n]})$ is a function value of the transverse synthesis of the lug, $g(a'_{[n]})$ is a function value of the longitudinal synthesis of the lug, N represents a number of rows of $a'_{[n]}$, and M represents a number of columns of $a'_{[n]}$.

8. The detection method according to any one of claims 1-7, **characterized in that**, the digitally processed original image is a final grayscale image *Gray(i, j)* obtained by sequentially performing the denoising process and the grayscale process on the original image, and the method further includes setting the baseline in the final grayscale image *Gray(i, j)* according to an edge position of the pole piece body of the battery cell.

9. The detection method according to claim 8, **characterized in that**, if part or all of the target lug image is not detected in the first detection area, the detection method further includes performing a binary separation of pixel on the final grayscale image *Gray(i, j)* according to following formula:

$$B(i,j) = \begin{cases} 0 & Gray(i,j) <= h \\ 1 & Gray(i,j) > h \end{cases}$$

wherein, a value range of h is 125~255.

10. The detection method according to claim 8, **characterized in that**, the denoising process comprises realizing stacking of three primary colors in the following manner to obtain the denoised image corresponding to the original image.

$$
\begin{cases}
R(i,j) = \sum_{m,n} R(i+m, j+n) * K_R(m,n) \\
G(i,j) = \sum_{m,n} G(i+m, j+n) * K_G(m,n) \\
B(i,j) = \sum_{m,n} B(i+m, j+n) * K_B(m,n)
\end{cases}
$$

wherein, *(i,j)* is a two-dimensional matrix position of any pixel in the original image, *R(i,j)*, *G(i,j)* and *B(i,j)* are corresponding values of the three primary colors RGB, $K_R(m,n)$, $K_G(m, n)$ and $K_B(m,n)$ are filter algorithms corresponding to the three primary colors RGB.

11. The detection method according to claim 10, **characterized in that**, the grayscale process comprises processing the denoised image in following manner to obtain the final grayscale image *Gray(i, j)*:

$$
Gray(i,j) = k_1 R(i,j) + k_2 G(i,j) + k_3 B(i,j)
$$

wherein, $k_1$, $k_2$ and $k_3$ are corresponding weighted values of the three primary colors RGB.

12. A lug defect detection system, comprising: at least one set of machine vision inspection device, the machine vision inspection device includes a camera and a processor, wherein,

the camera is adapted to collect original image of relevant area of lug during a preparation process of a battery cell, wherein the battery cell includes a pole piece, and the pole piece includes a pole piece body and a lug;
the processor is adapted to digitally process the original image and set a baseline according to an edge position of the pole piece body of the battery cell, wherein, from the baseline, a side close to the pole piece body in the battery cell is a first detection area, and another side away from the pole piece body is a second detection area; and
the processor is also adapted to detect a target lug image in the first detection area and the second detection area in a preset sequence according to the detection method in any one of claims 1~2 and 4~11, and determine whether the currently detected cell is a defective cell.

13. The detection system according to claim 12, **characterized in that**, number of the machine vision inspection devices is two groups, comprising a first group of machine vision inspection devices located at a first detection position and a second group of machine vision inspection devices located at a second detection position, the first detection position and the second detection positions are respectively located at process positions before the pole piece are rolled or stacked during the preparation process of the battery cell, and the first detection position is located in a former production sequence compared to the second detection position, wherein,

when both the first group of machine vision inspection devices and the second group of machine vision inspection devices determine that the currently detected cell is a defective cell, the first group of machine vision inspection device and/or the second group of machine vision inspection device is configured to mark the currently detected cell as a defective cell; and
when only the first group of machine vision inspection device or only the second group of machine vision inspection device determine that the currently detected cell is a defective cell, the first group of machine vision inspection device or the second group of machine vision inspection device is configured to mark the currently detected cell as a suspected defective cell for re-inspection.

**Patentansprüche**

1. Verfahren zur Erkennung von Laschenfehlern, **gekennzeichnet durch** umfassend:

   während eines Präparationsprozesses einer Batteriezelle, Sammeln des Originalbildes eines relevanten Bereichs der Lasche, wobei die Batteriezelle ein Polstück einschließt und das Polstück einen Polstückkörper und eine Lasche einschließt;
   in einem digital verarbeiteten Originalbild, Einstellen einer Basislinie basierend auf einer Kantenposition des Polstückkörpers, und, ausgehend von der Basislinie, Einstellen einer Seite nahe dem Polstückkörper als einen ersten Erkennungsbereich, Einstellen einer anderen Seite entfernt von dem Polstückkörper als einen zweiten Erkennungsbereich; **dadurch gekennzeichnet, dass** das Verfahren ferner Folgendes umfasst:

   Erkennen eines Ziellaschenbildes in dem ersten Erkennungsbereich und dem zweiten Erkennungsbereich nach einer voreingestellten Sequenz und Bestimmen, ob eine aktuell erkannte Zelle eine defekte Zelle ist; die voreingestellte Sequenz das sequentielle Erkennen des ersten Erkennungsbereiches und des zweiten Erkennungsbereiches einschließt, wobei, wenn ein Teil oder das gesamte Ziellaschenbild im ersten Erkennungsbereich erkannt wird, das Beurteilen der gegenwärtig erkannten Zelle als eine defekte Zelle, andernfalls das Bestimmen, ob die gegenwärtig erkannte Zelle eine defekte Zelle ist, nach einer oder einer Kombination von einer oder mehreren von Umriss-, Längen- und Breitenabmessungen oder dem Bereich des Ziellaschenbildes im zweiten Erkennungsbereich.

2. Erkennungsverfahren nach Anspruch 1, **dadurch gekennzeichnet, dass** während eines Vorbereitungsprozesses einer Batteriezelle der Schritt des Sammelns des Originalbildes eines relevanten Bereichs der Lasche ferner Folgendes umfasst: während eines Prozesses der kontinuierlichen Vorbereitung mehrerer Batteriezellen, kontinuierliches Sammeln des Originalbildes eines relevanten Bereichs der Lasche, der jeder Batteriezelle entspricht, bevor das jeder Batteriezelle entsprechende Polstück gerollt oder gestapelt wird.

3. Erkennungsverfahren nach Anspruch 2, **gekennzeichnet durch** ferner umfassend die Verwendung von zwei Sätzen von Bildverarbeitungsprüfvorrichtungen, um jeweils den Schritt des Sammelns des Originalbildes, des Einstellens der Basislinie und des Bestimmens, ob die aktuell erkannte Zelle die defekte Zelle ist, durchzuführen, wobei die beiden Sätze von Bildverarbeitungsprüfvorrichtungen jeweils in einer ersten Erkennungsposition und einer zweiten Erkennungsposition während des Präparationsprozesses der Batteriezelle angeordnet sind, und das Erkennungsverfahren ferner Folgendes einschließt:

   wenn beide Sätze von Bildverarbeitungsprüfvorrichtungen bestimmen, dass die aktuell erkannte Zelle eine defekte Zelle ist, Markieren der aktuell erkannten Zelle als defekte Zelle; und
   wenn nur ein Satz von Bildverarbeitungsprüfungsvorrichtungen bestimmt, dass es sich bei der aktuell erkannten Zelle um eine defekte Zelle handelt, Markieren der aktuell erkannten Zelle als eine vermutlich defekte Zelle zur erneuten Inspektion.

4. Erkennungsverfahren nach Anspruch 1, **dadurch gekennzeichnet, dass** das Erkennungsverfahren ferner die Verwendung eines regionalen Konsistenzalgorithmus einschließt, um mehrere Bereichspunkte in dem zweiten Erkennungsbereich zu erhalten, wobei mehrere Bereichspunkte zu einem geschlossenen Bereich verbunden werden, wodurch das Ziellaschenbild erhalten wird, wenn ein Teil oder das gesamte Ziellaschenbild nicht in dem ersten Erkennungsbereich erkannt wird, wobei der regionale Konsistenzalgorithmus Folgendes einschließt:

   Konstruieren einer quadratischen Matrix [n], wobei alle Werte n-ter Ordnung 1 sind, und Erhalten eines Pixels $a_{[n]}$ desselben Bereichs in dem zweiten Erkennungsbereich,
   wobei das Pixel $a_{[n]}$ desselben Bereichs durch binäre Trennung eines endgültigen Graustufenbildes erhalten wird, das durch einen Entrauschungsprozess und einen Graustufenprozess in dem zweiten Erkennungsbereich erhalten wird;
   Vergleichen desselben Bereichspixels $a_{[n]}$ mit der quadratischen Matrix [n], und wenn das Ergebnis Übereinstimmung zeigt, Zuweisen einer Position, an der sich derselbe Bereichspixel $a_{[n]}$ befindet, zu einem Wert von 255 und Setzen als Bereichspunkt; und
   Verbinden aller Bereichspunkte im zweiten Erkennungsbereich, um die geschlossene Region A zu bilden, und Erhalten des Umrisses, der Längen- und Breitenabmessungen oder des Bereichs des Ziellaschenbildes $a'_{[n]}$ entsprechend der geschlossenen Region A, wodurch bestimmt wird, ob die aktuell erkannte Zelle eine defekte Zelle ist.

**5.** Erkennungsverfahren nach Anspruch 4, **gekennzeichnet durch** ferner umfassend: Verwenden des folgenden Verfahrens, um eine Ähnlichkeit SIM($i$,j) zwischen der Region A und einem voreingestellten Laschenbild zu vergleichen und dadurch zu bestimmen, ob es sich bei der aktuell erkannten Zelle um eine defekte Zelle nach einem Umriss des Ziellaschenbildes im zweiten Erkennungsbereich handelt:

$$SIM(i,j) = \frac{u * \sum A(i,j)Y(i,j)}{\sqrt{\sum(A(i,j))^2}\,\sqrt{\sum(Y(i,j))^2}}$$

wobei A($i$,j) eine Außenkante der Region A ist, Y($i$,j) eine Außenkante des voreingestellten Laschenbildes ist und u ein einstellbarer Skalierungskoeffizient ist.

**6.** Erkennungsverfahren nach Anspruch 4, **gekennzeichnet durch** ferner umfassend: Verwenden der folgenden Art und Weise, um eine Laschenquerbreite L und eine Laschenlängsbreite H zu berechnen, wodurch bestimmt wird, ob es sich bei der aktuell erkannten Zelle um eine defekte Zelle nach den Längen- und Breitenabmessungen des Ziellaschenbildes im zweiten Erkennungsbereich handelt:

$$\begin{cases} L = \dfrac{\sum_{i=1}^{N} a'_{[n]_{iw}}}{N} - \dfrac{\sum_{i=1}^{N} a'_{[n]_{iv}}}{N} \\ H = \dfrac{\sum_{j=1}^{M} a'_{[n]_{pj}}}{M} - \dfrac{\sum_{j=1}^{M} a'_{[n]_{qj}}}{M} \end{cases}$$

wobei $a'_{[n]iw}$ ein seitlicher Positionswert von Pixel $a'_{[n]}$ in Spalte w und Zeile i ist, $a'_{[n]iv}$ ein horizontaler Positionswert von Pixel $a'_{[n]}$ in Spalte v und Zeile i ist, $a'_{[n]pj}$ ein vertikaler Positionswert von Pixel $a'_{[n]}$ in Spalte j und Zeile p ist, $a'_{[n]qj}$ ein vertikaler Positionswert von Pixel $a'_{[n]}$ in Spalte j und Zeile q ist, w und v jeweils den linken Anfangs- und den rechten Endpunkt der transversalen Breite L der Lasche bezeichnen, p und q jeweils den unteren Anfangs- und den oberen Endpunkt der longitudinalen Breite H der Lasche bezeichnen und w, v, p und q nach der Region A erhalten werden, N eine Anzahl von Zeilen von $a'_{[n]}$ darstellt und M eine Anzahl von Spalten von $a'_{[n]}$ darstellt.

**7.** Erkennungsverfahren nach Anspruch 4, **gekennzeichnet durch** ferner umfassend: Verwenden der folgenden Art und Weise, um eine Laschenquerbreite L und eine Laschenlängsbreite H zu berechnen, dann Berechnen eines Bereichs S$_A$ der Region A, dann Bestimmen, ob die gegenwärtig erkannte Zelle eine defekte Zelle ist, nach einem Bereich des Ziellaschenbildes im zweiten Erkennungsbereich:

$$\begin{cases} L = \dfrac{\sum_{i=1}^{N} a'_{[n]_{iw}}}{N} - \dfrac{\sum_{i=1}^{N} a'_{[n]_{iv}}}{N} \\ H = \dfrac{\sum_{j=1}^{M} a'_{[n]_{pj}}}{M} - \dfrac{\sum_{j=1}^{M} a'_{[n]_{qj}}}{M} \end{cases}$$

$$s_A = \frac{\int_{L_w}^{L_v} f(a'_{[n]})dL + \int_{H_p}^{H_q} g(a'_{[n]})dH}{2}$$

wobei $a'_{[n]iw}$ ein seitlicher Positionswert des Pixels $a'_{[n]}$ in der Spalte w und der Zeile i ist, $a'_{[n]iv}$ ein horizontaler Positionswert des Pixels a' [n] in der Spalte v und der Zeile i ist, $a'_{[n]pj}$ der vertikale Positionswert des Pixels $a'_{[n]}$ in der Spalte j und der Zeile p ist, $a'_{[n]qj}$ der vertikale Positionswert des Pixels $a'_{[n]}$ in der Spalte j und der Zeile q ist, und die w, v, p und q nach der Region A erhalten werden; $L_w$ ein linker Startpunkt der transversalen Breite L der Lasche ist, $L_v$ ein rechter Endpunkt der transversalen Breite L der Lasche ist, $H_p$ ein unterer Startpunkt der longitudinalen Breite H der Lasche ist, $H_q$ ein oberer Endpunkt der longitudinalen Breite H der Lasche ist, $f(a'_{[n]})$ ein Funktionswert der transversalen Synthese der Lasche ist, $g(a'_{[n]})$ ein Funktionswert der longitudinalen Synthese der Lasche ist, N eine Anzahl von Zeilen von $a'_{[n]}$ darstellt und M eine Anzahl von Spalten von $a'_{[n]}$ darstellt.

8. Erkennungsverfahren nach einem der Ansprüche 1 bis 7, **dadurch gekennzeichnet, dass** das digital verarbeitete Originalbild ein endgültiges Graustufenbild *Gray(i,j)* ist, das durch sequentielles Ausführen des Entrauschungsprozesses und des Graustufenprozesses auf dem Originalbild erhalten wird, und das Verfahren ferner das Einstellen der Basislinie in dem endgültigen Graustufenbild *Gray(i,j)* nach einer Kantenposition des Polstückkörpers der Batteriezelle einschließt.

9. Erkennungsverfahren nach Anspruch 8, **dadurch gekennzeichnet, dass** das Erkennungsverfahren ferner die Durchführung einer binären Trennung von Pixeln auf dem endgültigen Graustufenbild *Gray(i, j)* nach der folgenden Formel einschließt, wenn ein Teil oder das gesamte Ziellaschenbild im ersten Erkennungsbereich nicht erkannt wird:

$$B(i,j) = \begin{cases} 0 & Gray(i,j) <= h \\ 1 & Gray(i,j) > h \end{cases}$$

wobei ein Wertebereich für h 125-255 beträgt.

10. Erkennungsverfahren nach Anspruch 8, **dadurch gekennzeichnet, dass** der Entrauschungsprozess die Stapelung von drei Primärfarben in der folgenden Art und Weise umfasst, um das entrauschte Bild zu erhalten, das dem Originalbild entspricht:

$$\begin{cases} R(i,j) = \sum_{m,n} R(i+m, j+n) * K_R(m,n) \\ G(i,j) = \sum_{m,n} G(i+m, j+n) * K_G(m,n) \\ B(i,j) = \sum_{m,n} B(i+m, j+n) * K_B(m,n) \end{cases}$$

wobei *(i,j)* eine zweidimensionale Matrixposition eines beliebigen Pixels im Originalbild ist, *R(i,j)*, *G(i,j)* und *B(i,j)* entsprechende Werte der drei Primärfarben RGB sind, $K_R(m,n)$, $K_G(m,n)$ und $K_B(m,n)$ Filteralgorithmen entsprechend den drei Primärfarben RGB sind.

11. Erkennungsverfahren nach Anspruch 10, **dadurch gekennzeichnet, dass** der Graustufenprozess die Verarbeitung des entrauschten Bildes in folgender Art und Weise umfasst, um das endgültige Graustufenbild *Gray(i,j)* zu erhalten:

$$Gray(i,j) = k_1 R(i,j) + k_2 G(i,j) + k_3 B(i,j)$$

wobei $k_1$, $k_2$ und $k_3$ entsprechende gewichtete Werte der drei Primärfarben RGB sind.

12. System zur Erkennung von Laschenfehlern, umfassend:

mindestens einen Satz einer Bildverarbeitungsprüfvorrichtung, wobei die Bildverarbeitungsprüfvorrichtung eine Kamera und einen Prozessor einschließt, wobei
die Kamera geeignet ist, um ein Originalbild des relevanten Bereichs der Lasche während eines Vorbereitungsprozesses einer Batteriezelle zu sammeln,
wobei die Batteriezelle ein Polstück einschließt und das Polstück einen Polstückkörper und eine Lasche einschließt;
der Prozessor geeignet ist, das ursprüngliche Bild digital zu verarbeiten und eine Basislinie entsprechend einer Kantenposition des Polstückkörpers der Batteriezelle zu setzen, wobei von der Basislinie aus eine Seite nahe dem Polstückkörper in der Batteriezelle ein erster Erkennungsbereich ist und eine andere Seite entfernt von dem Polstückkörper ein zweiter Erkennungsbereich ist; und
der Prozessor auch geeignet ist, um ein Ziellaschenbild in dem ersten Erkennungsbereich und dem zweiten Erkennungsbereich in einer voreingestellten Sequenz nach dem Erkennungsverfahren in einem der Ansprüche 1 bis 2 und 4 bis 11 zu erkennen und zu bestimmen, ob die aktuell erkannte Zelle eine defekte Zelle ist.

13. Erkennungssystem nach Anspruch 12, **dadurch gekennzeichnet, dass** die Anzahl der Bildverarbeitungsprüfvorrichtungen zwei Gruppen beträgt, die eine erste Gruppe von Bildverarbeitungsprüfvorrichtungen umfassen, die sich an einer ersten Erkennungsposition befinden, und eine zweite Gruppe von Bildverarbeitungsprüfvorrichtungen, die sich an einer zweiten Erkennungsposition befinden, wobei sich die erste Erkennungsposition und die zweite Erkennungsposition jeweils an Prozesspositionen befinden, bevor das Polstück während des Vorbereitungsprozesses der Batteriezelle gerollt oder gestapelt wird, und die erste Erkennungsposition im Vergleich zur zweiten Erkennungsposition in einer früheren Produktionssequenz angeordnet ist, wobei

wenn sowohl die erste Gruppe von Bildverarbeitungsprüfvorrichtungen als auch die zweite Gruppe von Bildverarbeitungsprüfvorrichtungen bestimmen, dass die aktuell erfasste Zelle eine defekte Zelle ist, die erste Gruppe von Bildverarbeitungsprüfvorrichtungen und/oder die zweite Gruppe von Bildverarbeitungsprüfvorrichtungen konfiguriert ist, die aktuell erfasste Zelle als defekte Zelle zu markieren; und

wenn nur die erste Gruppe der Bildverarbeitungsprüfvorrichtung oder nur die zweite Gruppe der Bildverarbeitungsprüfvorrichtung bestimmt, dass die aktuell erfasste Zelle eine defekte Zelle ist, ist die erste Gruppe der Bildverarbeitungsprüfvorrichtung oder die zweite Gruppe der Bildverarbeitungsprüfvorrichtung konfiguriert, um die aktuell erfasste Zelle als eine mutmaßlich defekte Zelle für eine erneute Inspektion zu markieren.

## Revendications

1. Procédé de détection de défauts de languette, **caractérisé en ce qu'**il comprend :

lors d'un processus de préparation d'une cellule de batterie, la collecte d'une image originale d'une zone pertinente de languette, dans lequel, la cellule de batterie comporte une pièce polaire, et la pièce polaire comporte un corps de pièce polaire et une languette ;
dans une image originale traitée numériquement, la définition d'une ligne de base sur la base d'une position de bord du corps de pièce polaire, et à partir de la ligne de base, la définition d'un côté proche du corps de pièce polaire comme première zone de détection, et la définition d'un autre côté éloigné du corps de pièce polaire comme seconde zone de détection ; **caractérisé en ce que** le procédé comprend en outre :

la détection d'une image de languette cible dans la première zone de détection et la seconde zone de détection selon une séquence prédéfinie, et le fait de déterminer si une cellule actuellement détectée est une cellule défectueuse ;
la séquence prédéfinie comporte la détection séquentielle de la première zone de détection et de la seconde zone de détection, dans lequel si une partie ou la totalité de l'image de languette cible est détectée dans la première zone de détection, le jugement de la cellule actuellement détectée comme une cellule défectueuse, sinon, le fait de déterminer si la cellule actuellement détectée est une cellule défectueuse selon l'une des ou une combinaison des une ou plusieurs des dimensions de contour, de longueur et de largeur ou de la zone de l'image de languette cible dans la seconde zone de détection.

2. Procédé de détection selon la revendication 1, **caractérisé en ce que**, lors d'un processus de préparation d'une cellule de batterie, l'étape de collecte d'image originale d'une zone pertinente de languette comprend en outre : lors d'un processus de préparation en continu de plusieurs cellules de batterie, la collecte en continu de l'image originale d'une zone pertinente de languette correspondant à chaque cellule de batterie avant que la pièce polaire correspondant à chaque cellule de batterie ne soit enroulée ou empilée.

3. Procédé de détection selon la revendication 2, **caractérisé en ce qu'**il comprend en outre l'utilisation de deux ensembles de dispositifs d'inspection par vision industrielle pour réaliser respectivement l'étape de collecte d'image originale, la définition de la ligne de base et le fait de déterminer si la cellule actuellement détectée est la cellule défectueuse, les deux ensembles de dispositifs d'inspection par vision industrielle sont disposés respectivement dans une première position de détection et une seconde position de détection lors du processus de préparation de la cellule de batterie, et le procédé de détection comporte en outre :

lorsque les deux ensembles de dispositifs d'inspection par vision industrielle déterminent que la cellule actuellement détectée est une cellule défectueuse, le marquage de la cellule actuellement détecté comme une cellule défectueuse ; et

lorsqu'un seul ensemble de dispositifs d'inspection par vision industrielle détermine que la cellule actuellement détectée est une cellule défectueuse, le marquage de la cellule actuellement détectée comme une cellule potentiellement défectueuse pour une nouvelle inspection.

4. Procédé de détection selon la revendication 1, **caractérisé en ce que**, si une partie ou la totalité de l'image de languette cible n'est pas détectée dans la première zone de détection, le procédé de détection comporte en outre l'utilisation d'un algorithme de cohérence régionale pour obtenir de multiples points de zone dans la seconde zone de détection, la connexion de multiples points de zone pour former une zone fermée, permettant ainsi d'obtenir l'image de languette cible, dans lequel, l'algorithme de cohérence régionale comporte :

la construction d'une matrice carrée [n] avec n ordre tous étant 1, et l'obtention d'un pixel de même zone $a_{[n]}$ dans la seconde zone de détection, dans lequel, le pixel de même zone $a_{[n]}$ est obtenu par séparation binaire d'une image finale en niveaux de gris obtenue par processus de débruitage et processus de mise en niveaux de gris dans la seconde zone de détection ;

la comparaison du pixel de même zone $a_{[n]}$ avec la matrice carrée [n], et si un résultat montre une cohérence, l'attribution d'une position où le pixel de même zone $a_{[n]}$ est situé à une valeur de 255 et la définir comme un point de zone ; et

la connexion de tous les points de zone dans la seconde zone de détection pour former la région fermée A, et l'obtention des dimensions de contour, de longueur et de largeur ou de la zone de l'image de languette cible $a'_{[n]}$ selon la région fermée A, déterminant ainsi si la cellule actuellement détectée est une cellule défectueuse.

5. Procédé de détection selon la revendication 4, **caractérisé en ce qu'**il comprend en outre : l'utilisation du procédé suivant pour comparer une similarité SIM$(i,$j) entre la région A et une image de languette prédéfinie, déterminant ainsi si la cellule actuellement détectée est une cellule défectueuse selon un contour de l'image de languette cible dans la seconde zone de détection :

$$\text{SIM}(i,j) = \frac{u * \sum \text{A}(i,j)\text{Y}(i,j)}{\sqrt{\sum(\text{A}(i,j))^2}\,\sqrt{\sum(\text{Y}(i,j))^2}}$$

dans lequel, $A(i,j)$ est un bord extérieur de la région A, $Y(i,j)$ est un bord extérieur de l'image de languette prédéfinie, et u est un coefficient d'échelle ajustable.

6. Procédé de détection selon la revendication 4, **caractérisé en ce qu'**il comprend en outre : l'utilisation de la manière suivante pour calculer une largeur transversale de languette L et une largeur longitudinale de languette H, permettant ainsi de déterminer si la cellule actuellement détectée est une cellule défectueuse selon les dimensions de longueur et de largeur de l'image de languette cible dans la seconde zone de détection :

$$\begin{cases} L = \dfrac{\sum_{i=1}^{N} a'_{[n]iw}}{N} - \dfrac{\sum_{i=1}^{N} a'_{[n]iv}}{N} \\[2mm] H = \dfrac{\sum_{j=1}^{M} a'_{[n]pj}}{M} - \dfrac{\sum_{j=1}^{M} a'_{[n]qj}}{M} \end{cases}$$

dans lequel, $a'_{[n]iw}$ est une valeur de position latérale de pixel $a'_{[n]}$ dans la colonne w et la ligne i, $a'_{[n]iv}$ est une valeur de position horizontale de pixel $a'_{[n]}$ dans la colonne v et la ligne i, $a'_{[n]pj}$ est une valeur de position verticale de pixel $a'_{[n]}$ dans la colonne j et la ligne p, $a'_{[n]qj}$ est une valeur de position verticale de pixel $a'_{[n]}$ dans la colonne j et la ligne q, w et v désignent respectivement les points de départ gauche et d'arrivée droit de la largeur transversale de languette L, p et q désignent respectivement les points de départ inférieur et d'arrivée supérieur de la largeur longitudinale de languette H, et w, v, p et q sont obtenus selon la région A, N représente le nombre de lignes de $a'_{[n]}$, et M représente le nombre de colonnes de $a'_{[n]}$.

7. Procédé de détection selon la revendication 4, **caractérisé en ce qu'**il comprend en outre : l'utilisation de la manière suivante pour calculer une largeur transversale de languette L et une largeur longitudinale de languette H, puis le calcul d'une zone $S_A$ de la région A, puis le fait de déterminer si la cellule actuellement détectée est une cellule défectueuse selon une zone de l'image de languette cible dans la seconde zone de détection :

$$\begin{cases} L = \dfrac{\sum_{i=1}^{N} a'{}_{[n]iw}}{N} - \dfrac{\sum_{i=1}^{N} a'{}_{[n]iv}}{N} \\[3mm] H = \dfrac{\sum_{j=1}^{M} a'{}_{[n]pj}}{M} - \dfrac{\sum_{j=1}^{M} a'{}_{[n]qj}}{M} \end{cases}$$

$$s_A = \frac{\int_{L_w}^{L_v} f\left(a'{}_{[n]}\right) dL + \int_{H_p}^{H_q} g\left(a'{}_{[n]}\right) dH}{2}$$

dans lequel, $a'{}_{[n]iw}$ est une valeur de position latérale de pixel $a'{}_{[n]}$ dans la colonne w et la ligne i, $a'{}_{[n]iv}$ est une valeur de position horizontale de pixel $a'{}_{[n]}$ dans la colonne v et la ligne i, $a'{}_{[n]pj}$ est la valeur de position verticale de pixel $a'{}_{[n]}$ dans la colonne j et la ligne p, $a'{}_{[n]qj}$ est la valeur de position verticale de pixel $a'{}_{[n]}$ dans la colonne j et la ligne q, et les w, v, p et q sont obtenus selon la région A ; $L_w$ est un point de départ gauche de la largeur transversale de languette L, $L_v$ est un point d'arrivée droit de la largeur transversale de languette L, $H_p$ est un point de départ inférieur de la largeur longitudinale de languette H, $H_q$ est un point d'arrivée supérieur de la largeur longitudinale de languette H, $f(a'{}_{[n]})$ est une valeur de fonction de la synthèse transversale de la languette, $g(a'{}_{[n]})$ est une valeur de fonction de la synthèse longitudinale de la languette, N représente un nombre de lignes de $a'{}_{[n]}$ et M représente un nombre de colonnes de $a'{}_{[n]}$.

**8.** Procédé de détection selon l'une quelconque des revendications 1 à 7, **caractérisé en ce que**, l'image originale traitée numériquement est une image finale en niveaux de gris *Gray(i,j)* obtenue en réalisant séquentiellement le processus de débruitage et le processus de mise en niveaux de gris sur l'image originale, et le procédé comporte en outre la définition de la ligne de base dans l'image finale en niveaux de gris *Gray(i,j)* selon une position de bord du corps de pièce polaire de la cellule de batterie.

**9.** Procédé de détection selon la revendication 8, **caractérisé en ce que**, si une partie ou la totalité de l'image de languette cible n'est pas détectée dans la première zone de détection, le procédé de détection comporte en outre la réalisation d'une séparation binaire de pixel sur l'image finale en niveaux de gris *Gray(i,j)* selon la formule suivante :

$$B(i,j) = \begin{cases} 0 & Gray(i,j) <= h \\ 1 & Gray(i,j) > h \end{cases}$$

dans lequel, une plage de valeurs de h est de 125 à 255.

**10.** Procédé de détection selon la revendication 8, **caractérisé en ce que**, le processus de débruitage comprend la réalisation d'un empilement de trois couleurs primaires de la manière suivante pour obtenir l'image débruitée correspondant à l'image originale.

$$\begin{cases} R(i,j) = \sum_{m,n} R(i+m, j+n) * K_R(m,n) \\[3mm] G(i,j) = \sum_{m,n} G(i+m, j+n) * K_G(m,n) \\[3mm] B(i,j) = \sum_{m,n} B(i+m, j+n) * K_B(m,n) \end{cases}$$

dans lequel, *(i,j)* est une position de matrice bidimensionnelle d'un quelconque pixel dans l'image originale, *R(i,j)*, *G(i,j)* et *B(i,j)* sont les valeurs correspondantes des trois couleurs primaires RGB, $K_R(m,n)$, $K_G(m,n)$ et $K_B(m,n)$ sont des algorithmes de filtrage correspondant aux trois couleurs primaires RGB.

**11.** Procédé de détection selon la revendication 10, **caractérisé en ce que**, le processus de niveaux de gris comprend le traitement de l'image débruitée de la manière suivante pour obtenir l'image finale en niveaux de gris $Gray(i,j)$ :

$$Gray(i,j) = k_1 R(i,j) + k_2 G(i,j) + k_3 B(i,j)$$

dans lequel, $k_1$, $k_2$ et $k_3$ sont les valeurs pondérées correspondantes des trois couleurs primaires RGB.

**12.** Système de détection de défaut de languette, comprenant : au moins un ensemble de dispositifs d'inspection par vision industrielle, le dispositif d'inspection par vision industrielle comporte une caméra et un processeur, dans lequel,

la caméra est adaptée pour collecter l'image originale de la zone pertinente de languette lors d'un processus de préparation d'une cellule de batterie, dans lequel la cellule de batterie comporte une pièce polaire, et la pièce polaire comporte un corps de pièce polaire et une languette ;

le processeur est adapté pour traiter numériquement l'image originale et définir une ligne de base selon une position de bord du corps de pièce polaire de la cellule de batterie, dans lequel, à partir de la ligne de base, un côté proche du corps de pièce polaire dans la cellule de batterie est une première zone de détection, et un autre côté éloigné du corps de pièce polaire est une seconde zone de détection ; et

le processeur est également adapté pour détecter une image de languette cible dans la première zone de détection et la seconde zone de détection dans une séquence prédéfinie selon le procédé de détection selon l'une des revendications 1 et 2 et 4 à 11, et déterminer si la cellule actuellement détectée est une cellule défectueuse.

**13.** Système de détection selon la revendication 12, **caractérisé en ce que**, le nombre des dispositifs d'inspection par vision industrielle est de deux groupes, comprenant un premier groupe de dispositifs d'inspection par vision industrielle situé à une première position de détection et un second groupe de dispositifs d'inspection par vision industrielle situé à une seconde position de détection, la première position de détection et les secondes positions de détection sont respectivement situées à des positions de processus avant que la pièce polaire soit enroulée ou empilée lors du processus de préparation de la cellule de batterie, et la première position de détection est située dans une séquence de production antérieure par rapport à la seconde position de détection, dans lequel,

lorsque le premier groupe de dispositifs d'inspection par vision industrielle et le second groupe de dispositifs d'inspection par vision industrielle déterminent que la cellule actuellement détectée est une cellule défectueuse, le premier groupe de dispositifs d'inspection par vision industrielle et/ou le second groupe de dispositifs d'inspection par vision industrielle est configuré pour marquer la cellule actuellement détectée comme une cellule défectueuse ; et

lorsque seul le premier groupe de dispositifs d'inspection par vision industrielle ou seul le second groupe de dispositifs d'inspection par vision industrielle détermine que la cellule actuellement détectée est une cellule défectueuse, le premier groupe de dispositifs d'inspection par vision industrielle ou le second groupe de dispositifs d'inspection par vision industrielle est configuré pour marquer la cellule actuellement détectée comme une cellule potentiellement défectueuse pour une nouvelle inspection.

10

```
          ┌─────────────┐
          │    Start    │
          └──────┬──────┘
                 │
                 ▼
┌──────────────────────────────────────┐
│  during a preparation process of a   │      11
│  battery cell, collecting original   │
│  image of a relevant area of         │
│  lug                                 │
└──────────────────┬───────────────────┘
                   │
                   ▼
┌──────────────────────────────────────┐
│  in a digitally processed original   │
│  image, setting a baseline based on  │
│  an edge position of the pole        │
│  piece body, and from the baseline,  │      12
│  setting a side close to the pole    │
│  piece body as a first detection     │
│  area, setting another side away     │
│  from the pole piece body as a       │
│  second detection area               │
└──────────────────┬───────────────────┘
                   │
                   ▼
┌──────────────────────────────────────┐
│  detecting a target lug image in     │
│  the first detection region and the  │
│  second detection region according   │      13
│  to a preset sequence, and           │
│  determining whether a currently     │
│  detected cell is a defective cell   │
└──────────────────┬───────────────────┘
                   │
                   ▼
          ┌─────────────┐
          │     End     │
          └─────────────┘
```

FIG. 1a

100

Start

↓

during a preparation process of a battery cell, collecting original image of a relevant area of lug ⟋ 11

↓

in a digitally processed original image, setting a baseline based on an edge position of the pole piece body, and from the baseline, setting a side close to the pole piece body as a first detection area, setting another side away from the pole piece body as a second detection area ⟋ 12

↓ ⟋ 131

if part or all of the target lug is detected in the first detection area — NO

YES ⟋ 132

↓

judging the current detected cell as a defective cell

⟋ 133

determining whether the current detection cell is a defective cell according to one of or a combination of one or more of outline, length and width dimensions and area of the target lug image in the second detection area

End

FIG. 1b

FIG. 2

FIG. 3

FIG. 4

collecting the original image of the
relevant area of lug at high speed

the target lug image is not detected
in the first detection area S' — **NO** → marked as a
folding defect

**YES**

determining the outline, length and width dimensions and
area of the lug image in the second detection area S

**YES**

the outline of target lug image matches
the preset lug image — **NO** → marked as a
shape defect

**YES**

the length and width dimensions of
target lug image match the preset lug
image — **NO** → marked as a
shape defect

**YES**

the area of the target lug image
matches the preset lug image — **NO** → marked as a
size defect

Run normally, the next-level program
is executed

marked as a
defective cell

FIG. 5

$$[n] = \begin{bmatrix} 1 & 1 & \dots & 1 \\ 1 & 1 & \dots & 1 \\ \dots & \dots & \dots & \dots \\ 1 & 1 & 1 & 1 \end{bmatrix}$$

$a_{[n]}$

FIG. 6

```
                          cell operation
                               |
                               v
              /  the first group of machine vision  \
             <  detection device marks defective     >----------------+
              \           cell                       /                 |
                               |                                       | NO
                             YES                                       v
                               v                                       v
    /  the second group of machine vision \    /  the second group of machine vision \
   <  detection device marks defective     >  <  detection device marks defective     >
    \           cell                       /    \           cell                      /
              |                   |                        |                    |
            YES                  NO                      YES                   NO
              v                   v                        v                    v
    +------------------+ +-----------------------+ +------------------+ +------------------+
    | moving the       | | moving the currently  | |                  | | normal, executing|
    | currently        | | detected cell to the  | |                  | | the next-level   |
    | detected cell to | | manual visual         | |                  | | program          |
    | the waste area   | | detection area        | |                  | |                  |
    +------------------+ +-----------------------+ +------------------+ +------------------+
```

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 113203745 A